# FASCICULE DE BREVET EUROPEEN

(11) **EP 2 856 270 B1**
(45) Date de publication et mention de la délivrance du brevet: **11.01.2023**
(21) Numéro de dépôt: 13728456.8
(22) Date de dépôt: 22.05.2013
(51) Int. Cl.: G05B 23/02

(54) **SYSTEME DE TRAITEMENT D'INFORMATIONS POUR LA SURVEILLANCE D'UN SYSTEME COMPLEXE.**
INFORMATIONSVERARBEITUNGSSYSTEM ZUR ÜBERWACHUNG EINES KOMPLEXEN SYSTEMS
INFORMATION PROCESSING SYSTEM FOR MONITORING A COMPLEX SYSTEM

(30) Priorité: 28.05.2012 FR 1254902
(43) Date de publication de la demande: 08.04.2015
(73) Titulaire: Safran Aircraft Engines, 75015 Paris (FR)
(72) Inventeur: LE GONIDEC, Serge, F-27200 Vernon (FR); MALIKOV, Dimitri, F-75018 Paris (FR); BERECHET, Ion, F-94300 Vincennes (FR); BERECHET, Stefan, F-94340 Joinville Le Pont (FR)
(74) Mandataire: Cabinet Beau de Loménie
(86) Numéro de dépôt international: PCT/FR2013/051107
(87) Numéro de publication internationale: WO 2013/178913

(56) Documents cités:
- WO-A2-2005/013098
- FR-A1- 2 855 634

## Description

### Domaine technique et art antérieur

L'invention s'inscrit dans le domaine des systèmes et méthodes de surveillance de systèmes complexes, pour la détection et l'analyse de signaux représentant des dysfonctionnements ou des situations anormales. Le système complexe surveillé est un moteur de fusée.

Dans ce domaine, des indicateurs de défaut, aussi appelés « drapeaux » ou, en anglais, « flags » sont activés par un ou plusieurs traitements utilisant un capteur ou un ensemble de capteurs placés à un endroit donné du système complexe et mesurant une ou plusieurs grandeurs physiques lorsqu'une variation par rapport à un seuil est détectée.

Ces indicateurs de défaut peuvent indiquer une suspicion de défaut relative à un composant, un sous-système, un système complet ou parfois, un capteur, ou un défaut avéré. Ils peuvent prendre différentes valeurs d'intensité, par exemple sur une échelle discrète, allant d'une situation normale à une panne effective, la valeur d'intensité étant liée à la variation par rapport à un ou plusieurs seuils de référence. Quand le ou les capteurs qui activent un indicateur de défaut ne détectent plus de variation excessive par rapport aux seuils de référence, l'indicateur de défaut voit sa valeur d'intensité décroitre instantanément.

De manière particulièrement intéressante, les indicateurs de défaut peuvent disposer d'un niveau de confiance (NC) matérialisant leurs imperfections (imprécisions, incertitudes ou caractère incomplet, notamment). Le niveau de confiance peut être déterminé de différentes manières, notamment en évaluant des biais dans des signaux de capteurs ou en mesurant le bruit dans ceux-ci, ou encore en détectant une non-symétrie, comme évoqué dans le document WO 2011/104466. D'autres éléments peuvent éventuellement être pris en compte pour déterminer un niveau de confiance.

Quand les signaux portant sur un indicateur de défaut ou un ensemble d'indicateurs de défaut sont stables, et que le niveau de confiance associé n'est pas trop faible, on sait associer ces signaux à des pannes, qui sont des diagnostics pour la prise de décision pour une action, humaine ou automatisée. Ces signaux stables et nets constituent des signatures de panne. Ainsi, le document WO 2011/104466 divulgue d'associer à des indicateurs de défaut reçus dans des messages bruts, un ou plusieurs messages consolidés définissant des pannes, en fusionnant les informations des messages bruts, que ces messages soient associés à des pannes de composants, de sous-systèmes, du système complet ou de capteurs.

Une telle fusion d'indicateurs de défaut est de haut niveau décisionnel. Les indicateurs à fusionner peuvent constituer des informations redondantes, complémentaires, concordantes ou discordantes, symboliques ou numériques. Le niveau de confiance de chaque indicateur de défaut est pris en compte dans le processus de fusion.

Bien qu'un tel processus de fusion permette déjà d'obtenir des diagnostics d'une grande fiabilité, il est aussi souhaitable, pour la mise au point de tels diagnostics de panne, de prendre en compte des signaux fugitifs, qui peuvent être de faible intensité, et dont l'interprétation est moins simple que celles des indicateurs ou groupes d'indicateurs constituant des signatures majeures des pannes. De tels signaux fugitifs peuvent notamment être faiblement coordonnés entre eux, rendant le processus de fusion délicat.

### Résumé de l'invention

Pour prendre en compte de tels signaux fugitifs, il est proposé un système de traitement d'informations pour la surveillance d'un moteur de fusée tel que défini dans la revendication 1. Grâce à ce système, un signal fugitif conserve une certaine existence dans les instants suivant sa disparition, ce qui permet, si cela est adapté, de réaliser un processus de fusion avec des signaux faiblement coordonnés au signal fugitif traité.

On s'intéresse dans la divulgation du système qui suit à une situation dans laquelle la valeur de niveau de confiance rémanente est associée à au moins une valeur d'intensité de défaillance choisie en fonction d'une valeur d'intensité de défaillance associée à ladite date de détection. Ainsi le système prend en charge les échelles d'intensité variable évoquée en introduction. Néanmoins, l'invention se conçoit sans une telle échelle d'intensité variable. On s'intéresse aussi à la situation dans laquelle la valeur de niveau de confiance rémanente est associée à un indicateur de défaut associé à ladite information de détection d'événement. Le signal est alors prêt à faire l'objet d'une fusion avec d'autres signaux d'indicateurs de défaut. Néanmoins, dans certaines variantes, la génération du niveau de confiance rémanente pourrait avoir lieu avant validation des signaux de capteurs en un indicateur de défaut.

On s'intéresse aussi à la situation dans laquelle la valeur de niveau de confiance rémanente décroit au fil du temps à partir de la date de détection depuis une valeur dépendant d'un niveau de confiance initial associé au message de détection d'événement. On peut prendre ainsi en compte dans la valeur rémanente les informations de confiance générées par d'autres procédés.

Un mode de réalisation de l'invention comprend des moyens pour générer au moins deux valeurs de niveau de confiance rémanentes associées chacune à une valeur d'intensité de défaillance, chacune des au moins deux valeurs de niveau de confiance rémanentes évoluant indépendamment de l'autre.

Un autre mode de réalisation de l'invention comprend des moyens pour générer au moins deux valeurs de niveau de confiance rémanentes associées chacune à une valeur d'intensité de défaillance, la valeur de niveau de confiance rémanente parmi les au moins deux valeurs de niveau de confiance rémanentes associée à la valeur d'intensité de défaillance la plus élevée ou la plus basse étant mise à zéro si l'autre valeur de niveau de confiance rémanente est non nulle.

Dans une certaine implémentation de l'invention, la valeur de niveau de confiance rémanente est une valeur brute, pouvant faire l'objet d'une intégration.

Dans ces conditions, un mode de réalisation de l'invention comprend de plus des moyens pour générer une valeur de niveau de confiance rémanente intégrée dont la valeur à ladite date de détection est égale au niveau de confiance initial combinée avec la valeur de niveau de confiance rémanente brute à ladite date de détection, et dont la valeur aux dates qui ne sont pas des dates de détection est nulle.

Un autre mode de réalisation de l'invention comprend de plus des moyens pour générer une valeur de niveau de confiance rémanente intégrée dont la valeur à toute date est égale au niveau de confiance initial combinée avec la valeur de niveau de confiance rémanente brute.

Dans ces deux modes de réalisation, la combinaison entre le niveau de confiance initial et la valeur de niveau de confiance rémanente brute pour donner la valeur de confiance rémanente intégrée peut notamment être une addition.

Dans un mode de réalisation particulier de l'invention, l'information de détection d'événement associée à une date de détection est incluse dans un message de panne comprenant au moins une date de panne, un niveau de confiance initial et un identifiant de panne. Ainsi toutes les informations nécessaires sont fournies au module de génération de la valeur de confiance rémanente, sous la forme d'un message.

Il est de plus particulièrement avantageux pour l'utilisateur qu'une durée à partir de laquelle la valeur de niveau de confiance rémanente est nulle puisse être paramétrée par un utilisateur, pour un unique indicateur de défaut, ou pour plusieurs indicateurs de défaut.

Egalement, il est avantageux pour l'utilisateur qu'une loi de décroissance puisse être paramétrée par un utilisateur, pour la valeur de niveau de confiance rémanente pour un unique indicateur de défaut, ou pour plusieurs indicateurs de défaut.

Il est également proposé un procédé de traitement d'informations pour la surveillance d'un moteur de fusée tel que défini dans la revendication 12.

Ce procédé présente des avantages similaires à ceux du système présenté. Il peut être mis en œuvre sous une forme logicielle.

### Brève description des figures

La figure 1 présente un mode général de réalisation de l'invention.
La figure 2 présente les signaux produits par un système selon l'invention dans un mode de réalisation de l'invention.
La figure 3 présente un aspect général d'implémentation de l'invention.
Les figures 4 à 7 présentent des modes de réalisation particuliers de l'invention.
La figure 8 présente un schéma général d'un mode de réalisation détaillé de l'invention.

### Description détaillée de modes de réalisation de l'invention

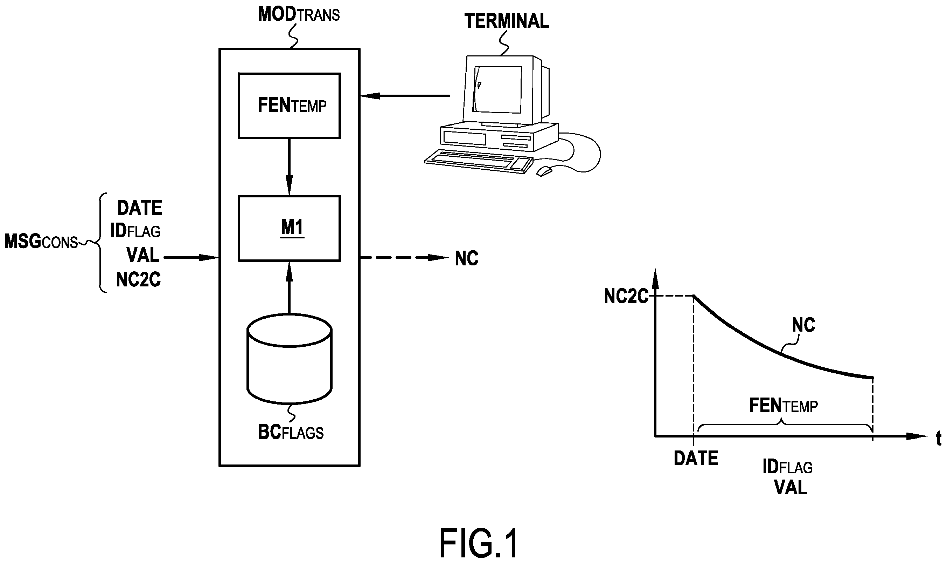

En **figure 1****,** on a représenté le module MOD_{TRANS} qui reçoit en entrée des messages, qui sont ici des messages consolidés MSG_{CONS}. Le caractère « consolidé » des messages MSG_{CONS} fait référence au fait qu'ils ont fait l'objet d'un prétraitement, par exemple par utilisation d'une base de connaissance relative à l'architecture et aux propriétés du système surveillé.

Ces messages MSG_{CONS} sont associés à une date d'événement DATE, un identifiant d'indicateur de défaut ID_{FLAG}, une valeur d'intensité de défaillance VAL et un niveau de confiance NC2C. Le chiffre 2 dans la notation NC2C indique que ce niveau de confiance est un niveau de confiance dérivé d'un niveau de confiance primitif, d'une manière ou d'une autre.

La valeur d'intensité de défaillance VAL peut par exemple être choisie dans un espace discret de valeurs, comme par exemple l'ensemble 0, 1, 2, 3. Dans le mode de réalisation présenté, la date DATE, l'identifiant ID_{FLAG}, la valeur VAL et le niveau NC2C sont inclus dans le message MSG_{CONS}.

Le module MOD_{TRANS} utilise une base de connaissance des indicateurs de défaut BC_{FLAGS} et un module des axes temporels intensité/temps M1 pour générer un signal temporel brut d'indicateur de défaut SIG_{BRUT}, associé à l'identifiant d'indicateur ID_{FLAG} et à la valeur d'intensité de défaillance VAL. A l'inverse des messages MSG_{CONS} qui sont reçus par le module MOD_{TRANS} uniquement quand un événement est détecté par un capteur, le signal SIG_{BRUT} généré par le module MOD_{TRANS} est un signal continu, fonction du temps. Comme représenté sur la courbe en partie droite de la figure 1, qui est une simplification illustrative, il prend la valeur NC2C à la date DATE, puis décroit.

On précise que le module MOD_{TRANS} prend en compte une variable choisie par l'utilisateur via un terminal. Cette variable est une fenêtre temporelle FEN_{TEMP}, exprimant une durée. Une fois la durée FEN_{TEMP} écoulée à partie de la date DATE, le signal SIG_{BRUT} est ramené à zéro.

Selon l'invention, le module MOD_{TRANS} prend également en compte une fonction de décroissance choisie par l'utilisateur via le terminal, et l'allure de la décroissance du signal SIG_{BRUT} est alors définie par cette fonction. On précise que la fonction de décroissance et la fenêtre temporelle FEN_{TEMP} peuvent toutes deux être choisies par l'utilisateur de manière spécifique pour chaque indicateur, identifié par son identifiant ID_{FLAG} et/ou pour chaque valeur d'intensité VAL.

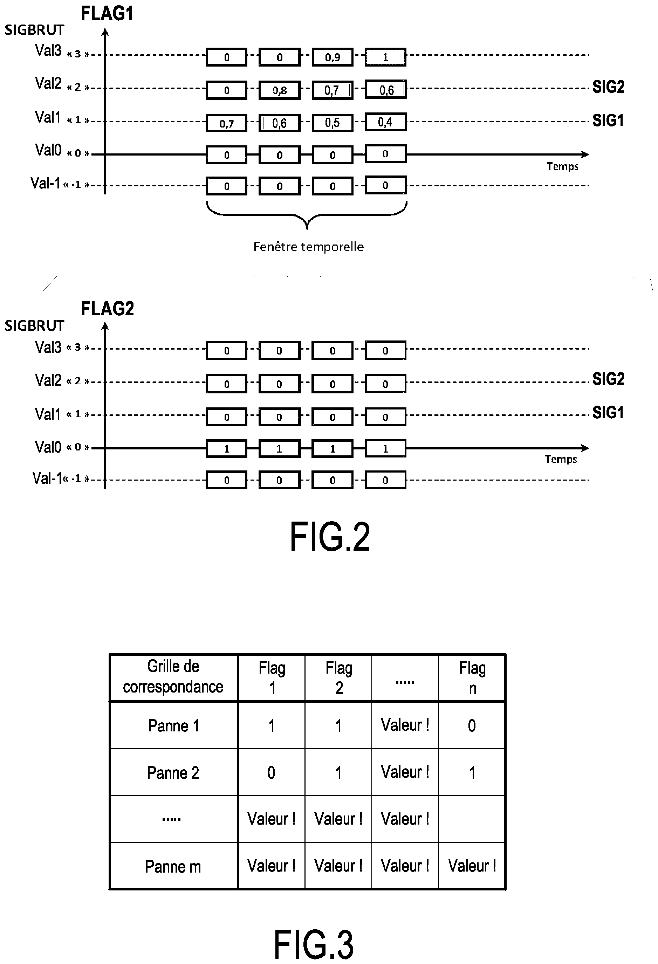

En **figure 2** on a représenté les signaux générés en parallèle (simultanément) par le module MOD_{TRANS} pour deux indicateurs différents, FLAG1 et FLAG2.

Ces deux indicateurs sont présentés avec cinq niveaux d'intensité différents, à savoir les niveaux Val-1, Val0, Val1, Val2 et Val3. Le niveau Val-1 représente ici une indisponibilité d'information, et les niveaux de 0 à 3 indiquent quant à eux selon une convention des intensités de gravité de panne, signifiant respectivement « Tout va bien », « Défaillance minime », « Défaillance grave » et « Panne ».

Pour chaque indicateur et pour chaque niveau d'intensité, un signal brut similaire au signal SIG_{BRUT} présenté en figure 1 est produit de manière continue par le module MOD_{TRANS}. Deux signaux sont indiqués en particulier sur la figure 2, à titre d'exemple. Il s'agit des signaux SIG1 et SIG2. Ces signaux décroissent à partir d'une valeur initiale prise pour une date particulière. Chacun de ces signaux devient de plus nul à partir de l'écoulement de la durée correspondant à la fenêtre temporelle FEN_{TEMP}.

En **figure 3****,** on a représenté une table de correspondance entre indicateurs de défaut et pannes, dans un mode de réalisation de l'invention. Conformément à cette table, la fusion des indicateurs de défaut pour une panne donnée, se fait en considérant les indicateurs de défaut indiqués par un « 1 » ou une autre valeur dans le tableau, et en écartant ceux pour lesquels le tableau contient « 0 ».

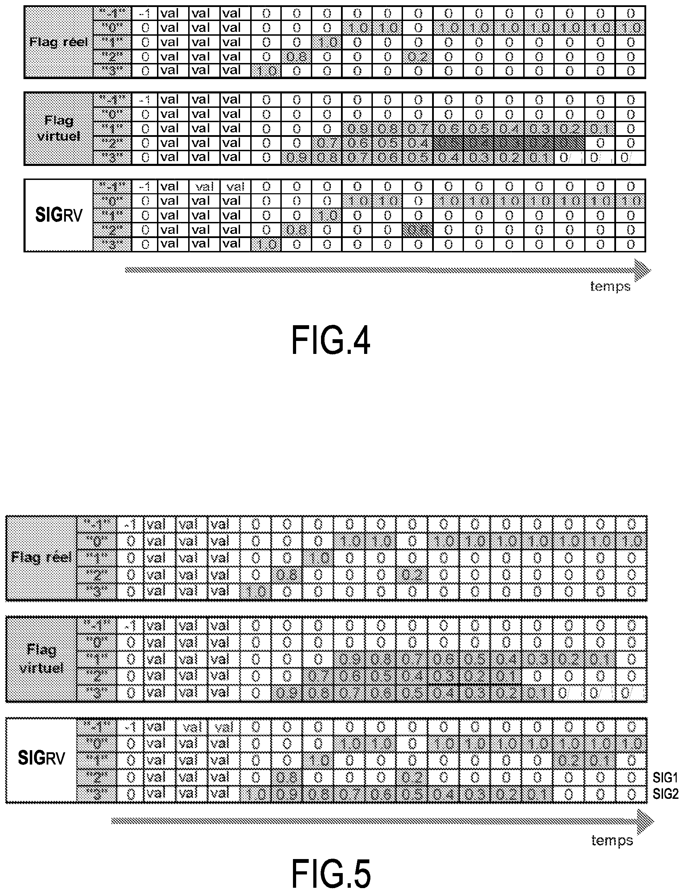

En **figure 4****,** on a représenté la consolidation d'un indicateur de défaut conformément à un premier mode de réalisation de l'invention. Un indicateur réel, construit uniquement sur la base des informations contenues dans les messages MSG_{CONS} est présenté en partie haute de la figure. On constate que pour chaque date, une seule intensité est activée. Elle correspond à l'intensité VAL indiquée dans le message MSG_{CONS}. Elle a un niveau de confiance égal à celui défini dans le message MSG_{CONS}, à savoir NC2C. Pour les dates auxquelles aucun message MSG_{CONS} n'est reçu, toutes les intensités de l'indicateur ont un niveau de confiance nul, sauf l'intensité 0 qui a un niveau de confiance égal à 1.0.

Un indicateur qualifié de virtuel est ensuite présenté dans la partie intermédiaire de la figure. Il s'agit de l'indicateur de confiance rémanent tel que produit par le module MOD_{TRANS} présenté en figure 1. On constate que dans les instants qui suivent la réception d'un message MSG_{CONS}, l'intensité correspondante est activée et a un niveau de confiance qui décroit à partir d'une valeur initiale définie par la valeur NC2C contenue dans le message MSG_{CONS}. Cela est observé pour les intensités 1, 2 et 3. L'intensité 0 reste quant à elle à un niveau de confiance toujours égal à 0 dans cet indicateur virtuel.

L'exemple de la figure montre une réactivation transitoire de l'intensité « 2 » suite à un message MSG_{CONS}. Dans ce scénario, le niveau de confiance rémanent est de 0.4 au moment de l'arrivée du message, et celui-ci indique un niveau de confiance de 0.2. Le niveau de confiance rémanent décroit ensuite à partir de la somme de ces deux valeurs, soit 0.6. La première valeur visible est de 0.5.

La figure présente enfin, dans sa partie basse, un indicateur SIG_{RV} résultant de l'intégration (ou addition) des deux indicateurs présentés ci-dessus avec la règle de la séparation des indicateurs réels et virtuels (espace virtuel distinct de l'espace réel). Dans ce mode de réalisation, l'indicateur virtuel est additionné à l'indicateur réel uniquement lors d'un changement d'intensité de l'indicateur réel. Ainsi, la valeur de l'indicateur intégré à une date de détection définie par un message MSG_{CONS} pour une intensité est égale au niveau de confiance initial contenu dans ce message (NC2C) additionné de la valeur de niveau de confiance rémanente à cet instant, tel que donnée par l'indicateur virtuel. Aux dates qui ne sont pas des dates de détection la valeur de l'indicateur intégré est nulle.

On précise que la combinaison entre le niveau de confiance initial (NC2C) et la valeur de niveau de confiance rémanente brute pour donner la valeur de confiance rémanente intégrée (SIG_{RV}) pourrait prendre une autre forme qu'une simple addition.

Dans le scénario présenté, l'indicateur intégré est donc égal à l'indicateur réel, sauf à la date de réactivation de l'intensité 2, à laquelle il prend comme valeur la somme de la valeur de confiance de l'indicateur réel, 0.2, additionnée de la valeur de confiance de l'indicateur virtuel, 0.4, soit une valeur de 0.6.

En **figure 5****,** on a représenté la consolidation d'un indicateur de défaut conformément à un deuxième mode de réalisation de l'invention. Un indicateur réel, identique à celui présenté en figure 4, est présenté en partie haute de la figure. Pour les dates auxquelles aucun message MSG_{CONS} n'est reçu, toutes les intensités de l'indicateur ont un niveau de confiance nul, sauf l'intensité 0, qui a une valeur de confiance égale à 1.0.

Un indicateur virtuel est ensuite présenté dans la partie intermédiaire de la figure. Comme en figure 4, dans les instants qui suivent la réception d'un message MSG_{CONS}, l'intensité correspondante est activée et a son niveau de confiance qui décroit à partir d'une valeur initiale définie par la valeur NC2C contenue dans le message MSG_{CONS}.

Ainsi, par exemple, quand un message MSG_{CONS} indiquant une réactivation de l'intensité 2 de l'indicateur avec un niveau de confiance de 0.2 est reçu, l'indicateur réel en fait état, comme en figure 4. Par contre, dans le mode de réalisation représenté, l'indicateur virtuel suit l'évolution qu'il avait avant la réception du message, sans prendre en compte cette réactivation de l'intensité 2 de l'indicateur. Ce choix est fait, dans cet exemple, en tenant compte du fait que le niveau de confiance rémanent pour l'intensité 2, ici 0.4, est supérieur à celui associé à l'indicateur réel, à savoir 0.2.

La figure présente enfin, dans sa partie basse, un indicateur SIG_{RV} résultant de l'intégration des deux indicateurs présentés ci-dessus avec la règle de la superposition des espaces virtuel et réel, utilisant le souvenir le plus grave. Dans ce mode de réalisation, l'indicateur intégré est, à chaque instant, égal à la somme de l'indicateur réel et de l'intensité activée la plus élevée de l'indicateur virtuel. Ainsi, les intensités de l'indicateur virtuel moins élevées qu'une intensité activée voient leur niveau de confiance ramené à 0. Dans le mode de réalisation présenté, on voit que l'intensité 3 ayant été activée initialement, elle a dans l'indicateur intégré, une valeur de confiance qui diminue progressivement, comme dans l'indicateur virtuel. A l'inverse, les intensités 1 et 2, moins élevées que l'intensité 3, ont leurs niveaux de confiance respectifs ramenés à 0 dès l'instant suivant la date du message MSG_{CONS} les activant.

On précise ici aussi que la combinaison entre le niveau de confiance initial (NC2C) et la valeur de niveau de confiance rémanente brute pour donner la valeur de confiance rémanente intégrée (SIG_{RV}) pourrait prendre une autre forme qu'une simple addition.

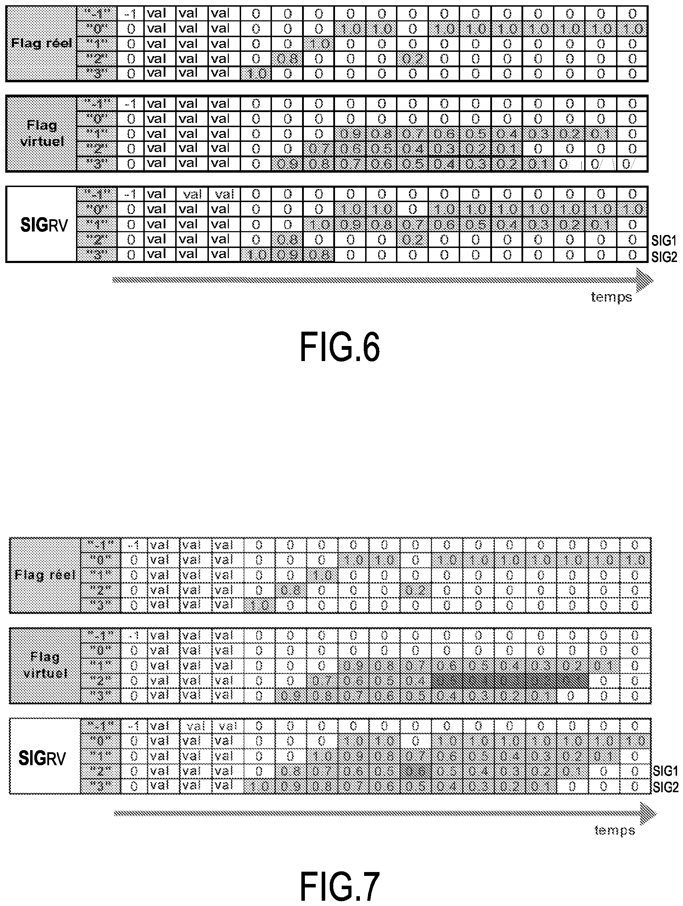

En **figure 6****,** on a représenté la consolidation d'un indicateur de défaut conformément à un troisième mode de réalisation de l'invention. Un indicateur réel, identique à celui présenté en figures 4 et 5, est présenté en partie haute de la figure. Un indicateur virtuel est ensuite présenté dans la partie intermédiaire de la figure. Il est identique à celui présenté en figure 5.

La figure présente enfin, dans sa partie basse, un indicateur SIG_{RV} résultant de l'intégration des deux indicateurs présentés ci-dessus avec la règle de la superposition des espaces virtuel et réel, utilisant cette fois-ci le souvenir le moins grave. Dans ce mode de réalisation, l'indicateur intégré est, à chaque instant, égal à la somme de l'indicateur réel et de l'intensité activée la moins élevée (à l'exclusion de l'intensité 0) de l'indicateur virtuel. Ainsi, les intensités de l'indicateur virtuel plus élevées qu'une intensité activée voient leur niveau de confiance ramené à 0. Dans le mode de réalisation présenté, on voit que l'intensité 1 étant activée après l'intensité 3, elle a dans l'indicateur intégré, une valeur de confiance qui diminue progressivement, comme dans l'indicateur virtuel, alors que l'intensité 3 voit son niveau de confiance ramené à 0 dès l'instant qui suit l'activation de l'intensité 1.

On précise à nouveau que la combinaison entre le niveau de confiance initial (NC2C) et la valeur de niveau de confiance rémanente brute pour donner la valeur de confiance rémanente intégrée (SIG_{RV}) pourrait prendre une autre forme qu'une simple addition.

En **figure 7****,** on a représenté la consolidation d'un indicateur de défaut conformément à un quatrième mode de réalisation de l'invention. Un indicateur réel, identique à celui présenté en figures 4 à 6, est présenté en partie haute de la figure. Un indicateur virtuel est ensuite présenté dans la partie intermédiaire de la figure. Il est identique à celui présenté en figures 5 et 6.

La figure présente enfin, dans sa partie basse, un indicateur SIG_{RV} résultant de l'intégration des deux indicateurs présentés ci-dessus avec la règle de la superposition des espaces virtuel et réel, utilisant cette fois-ci tous les souvenirs. Dans ce mode de réalisation, l'indicateur intégré est, à chaque instant, égal à la somme de l'indicateur réel et de l'indicateur virtuel. On voit sur la figure la prise en compte d'une réactivation de l'intensité 2 qui se traduit, dans l'indicateur intégré par une remontée du niveau de confiance associé à cette intensité, après une première phase de diminution progressive et avant une deuxième phase de diminution progressive.

On précise encore que la combinaison entre le niveau de confiance initial (NC2C) et la valeur de niveau de confiance rémanente brute pour donner la valeur de confiance rémanente intégrée (SIG_{RV}) pourrait prendre une autre forme qu'une simple addition.

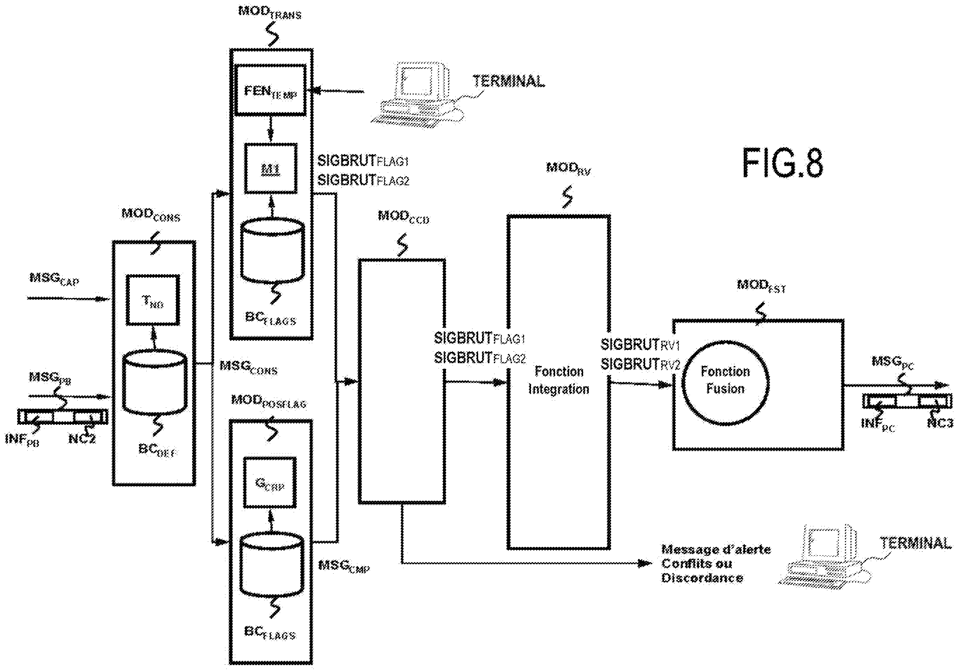

En **figure 8****,** on a représenté un exemple de réalisation d'un système complet mettant en œuvre l'invention. Notamment, ce système complet reçoit des messages comprenant des indicateurs de défaut, les traite notamment pour générer une valeur de niveau de confiance rémanente et les fusionnent pour obtenir un diagnostic de panne permettant une prise de décision humaine ou automatisée pour une action, par exemple une action corrective, ou une action préventive.

L'entrée du système est constituée par un module MOD_{CONS} pour la consolidation de messages bruts MSG_{PB} et MSG_{CAP}, qui sont reçus par ce module d'entrée du système. Ces messages sont, pour les premiers, des messages d'état comprenant une information d'état INF_{PB}, comprenant l'identifiant d'un composant, l'identifiant d'un indicateur de défaut ID_{FLAG} et un niveau de confiance NC2, et pour les deuxièmes, des messages relatifs à l'état de capteurs, auxquels sont également associés des niveaux de confiance. Les notations sont choisies en référence au document WO 2011/104466.

Le module MOD_{CONS} fait appel à une base de connaissance BC_{DEF} pour extraire une table de la gravité de la défaillance T_{ND} et fournit un message consolidé MSG_{CONS} incluant une intensité de défaillance ND2C sur l'échelle 0, 1, 2 et 3. Si le capteur en cause est défaillant, l'intensité de défaillance est -1, signifiant une indisponibilité d'informations. Un niveau de confiance consolidé NC2C est aussi produit et inséré dans les messages consolidés générés, en fonction des niveaux de confiance reçus dans différents messages MSG_{PB} et MSG_{CAP}.

Les messages MSG_{CONS} sont transmis au module MOD_{TRANS} qui les utilise comme évoqué en relation avec la figure 1, et produit donc de manière continue des signaux temporels bruts d'indicateurs de défaut, SIG_{BRUTFLAG1}, SIG_{BRUTFLAG2}, etc.

Les messages MSG_{CONS} sont transmis au module MOD_{POSFLAG} de positionnement des indicateurs qui fait appel à une base de connaissance des indicateurs BC_{FLAGS} pour positionner les messages MSG_{CONS} sur la grille de correspondance indicateur / pannes définissant l'ensemble moteur, sous système et composants, telle que présentée par exemple en figure 3. Des messages MSG_{CMP} sont ainsi complétés par rapport aux messages MSG_{CONS} reçus et émis par le module. Ils comprennent les identifiants des pannes auxquelles l'indicateur de défaut ID_{FLAG} est associé par la base de connaissance BC_{FLAGS}, ainsi que le poids à donner à l'indicateur dans le calcul de la panne.

Les signaux SIG_{BRUT} générés par le module MOD_{TRANS} et les messages MSG_{CMP} générés par le module MOD_{POSFLAG} sont dirigés vers un module MOD_{CCD} de gestion des conflits, de résolution des discordances et de recherche de corrélation. Dans le cas de conflit ou de discordance, ce module peut envoyer, dans certains modes de réalisation, un signal d'alerte à un terminal utilisé par un opérateur.

Les signaux sont ensuite dirigés vers un module MOD_{RV} qui intègre les indicateurs réels (reçus du module MOD_{POSFLAG}) et les indicateurs virtuels (reçus du module MOD_{TRANS}), comme présenté précédemment en relation avec les figures 4 à 7. Il produit les signaux SIG_{BRUTRV1}, SIG_{BRUTRV2} etc, pour chaque indicateur de défaut. Enfin, les informations sont transmises à un module de fusion MOD_{FST} qui procède à la fusion des différents indicateurs pour obtenir des informations de panne INF_{PC}, avec des niveaux de confiance NC3. Ces données sont incluses dans des messages de panne consolidés MSG_{PC}.

L'invention a été présentée en relation avec des modes de réalisations particuliers, mais elle n'est pas limitée à ceux-ci. Elle s'étend à toutes les variantes dans le cadre de la portée des revendications.

## Revendications

1. Système de traitement d'informations (MOD_{TRANS}) pour la surveillance d'un moteur de fusée, comprenant des moyens pour recevoir des informations de détection d'événement (MSG_{PB}, MSG_{CONS}) sous la forme de messages associés à une date de détection (DATE), à un identifiant d'indicateur de défaut et à un niveau de confiance initial (NC2), des moyens pour générer au moins une valeur de niveau de confiance rémanente (NC, SIG_{BRUT}, SIG, SIG_{RV}, SIG1, SIG2), ledit système étant **caractérisé par** un moyen configuré pour prendre en compte une loi de décroissance paramétrée par un utilisateur à travers un terminal et reçues dudit terminal, la valeur de niveau de confiance rémanente décroissant au fil du temps à partir de ladite date de détection (DATE) selon ladite loi de décroissance, la valeur de niveau de confiance rémanente (SIG_{BRUT}, SIG, SIG_{RV}, SIG1, SIG2) étant associée à un indicateur de défaut (FLAG, FLAG1, FLAG2) associé à une desdites informations de détection d'événement (MSG_{PB}, MSG_{CONS}), ledit système comprenant un module (MODFST) configuré pour fusionner au moins ledit indicateur de défaut associé à ladite valeur de niveau de confiance rémanente et ledit indicateur de défaut au niveau de confiance initial pour obtenir un diagnostic de panne.

2. Système de traitement selon la revendication 1, dans lequel ladite au moins une valeur de niveau de confiance rémanente (SIG_{BRUT}, SIG, SIG_{RV}, SIG1, SIG2) est associée à au moins une valeur d'intensité de défaillance (Val-1, Val0, Val1, Val2, Val3) choisie en fonction d'une valeur d'intensité de défaillance (ND2C) associée à ladite date de détection (DATE).

3. Système de traitement selon l'une des revendications 1 à 2, comprenant des moyens pour générer au moins deux dites valeurs de niveau de confiance rémanentes (SIG1, SIG2) associées chacune à une valeur d'intensité de défaillance (Val-1, Val0, Val1, Val2, Val3), chacune des au moins deux valeurs de niveau de confiance rémanentes (SIG1, SIG2) évoluant indépendamment de l'autre.

4. Système de traitement selon l'une des revendications 1 à 2, comprenant des moyens pour générer au moins deux dites valeurs de niveau de confiance rémanentes (SIG1, SIG2) associées chacune à une valeur d'intensité de défaillance (Val-1, Val0, Val1, Val2, Val3), la valeur de niveau de confiance rémanente parmi les au moins deux valeurs de niveau de confiance rémanentes (SIG1, SIG2) associée à la valeur d'intensité de défaillance la plus élevée ou la plus basse étant mise à zéro si l'autre valeur de niveau de confiance rémanente (SIG1, SIG2) est non nulle.

5. Système de traitement selon l'une des revendications 1 à 4, dans lequel ladite au moins une valeur de niveau de confiance rémanente (SIG_{BRUT}, SIG, SIG_{RV}, SIG1, SIG2) décroit au fil du temps à partir de la date de détection (DATE) depuis une valeur dépendant du niveau de confiance initial (NC2, NC2C) associé à l'une desdites informations de détection d'événement (MSG_{PB}, MSG_{CONS}).

6. Système de traitement selon la revendication 5, qui, ladite au moins une valeur de niveau de confiance rémanente (SIG_{BRUT}, SIG) étant une valeur brute, comprend de plus des moyens pour générer une valeur de niveau de confiance rémanente intégrée (SIG_{RV}) dont la valeur à ladite date de détection (DATE) est égale au niveau de confiance initial (NC2, NC2C) combinée avec la valeur de niveau de confiance rémanente brute (SIG_{BRUT}, SIG) à ladite date de détection (DATE), et dont la valeur aux dates qui ne sont pas des dates de détection est nulle

7. Système de traitement selon la revendication 6, qui, ladite au moins une valeur de niveau de confiance rémanente (SIG_{BRUT}, SIG) étant une valeur brute, comprend de plus des moyens pour générer une valeur de niveau de confiance rémanente intégrée (SIG_{RV}) dont la valeur à toute date est égale au niveau de confiance initial (NC2, NC2C) combinée avec la valeur de niveau de confiance rémanente brute (SIG_{BRUT}, SIG).

8. Système de traitement selon l'une des revendications 6 ou 7, dans lequel la combinaison entre le niveau de confiance initial et la valeur de niveau de confiance rémanente brute pour donner la valeur de confiance rémanente intégrée est une addition.

9. Système de traitement selon l'une des revendications 1 à 8, dans lequel ladite information de détection d'événement associée à une date de détection (DATE) est incluse dans un message de panne (MSG_{CONS}) comprenant au moins une date de panne (DATE), un niveau de confiance initial (NC2C) et un identifiant de panne (ID_{PANNE}).

10. Système de traitement selon l'une des revendications 1 à 9, dans lequel une durée (FEN_{TEMP}) à partir de laquelle ladite au moins une valeur de niveau de confiance rémanente (SIG_{BRUT}, SIG, SIG_{RV}) est nulle est paramétrée par un utilisateur (TERMINAL), pour un unique indicateur de défaut (FLAG, FLAG1, FLAG2), ou pour plusieurs indicateurs de défaut (FLAG, FLAG1, FLAG2).

11. Système de traitement selon l'une des revendications 1 à 10, dans lequel ladite loi de décroissance est paramétrée par ledit utilisateur (TERMINAL), pour ladite au moins une valeur de niveau de confiance rémanente (SIG_{BRUT}, SIG, SIG_{RV}) pour un unique indicateur de défaut (FLAG, FLAG1, FLAG2), ou pour plusieurs indicateurs de défaut (FLAG, FLAG1, FLAG2).

12. Procédé de traitement d'informations pour la surveillance d'un moteur de fusée, comprenant une étape de réception d'informations de détection d'événement sous la forme de messages associés à une date de détection, (DATE), à un identifiant d'indicateur de défaut et à un niveau de confiance initial (NC2), une étape de génération d'au moins une valeur de niveau de confiance rémanente, ledit procédé étant **caractérisé par** une étape de réception d'une loi de décroissance paramétrée par un utilisateur à travers un terminal et reçues dudit terminal, la valeur de niveau de confiance décroissant au fil du temps à partir de la date de détection selon ladite loi de décroissance, chaque valeur de niveau de confiance rémanente (SIG_{BRUT}, SIG, SIG_{RV}, SIG1, SIG2) étant associée à un indicateur de défaut (FLAG, FLAG1, FLAG2) associé à une desdites informations de détection d'événement (MSG_{PB}, MSG_{CONS}), ledite procédé comprend une étape de fusion dudit indicateur de défaut associé à ladite valeur de niveau de confiance rémanente et ledit indicateur de défaut au niveau de confiance initial pour obtenir un diagnostic de panne.

## Patentansprüche

1. System zur Verarbeitung von Informationen (MOD_{TRANS}) für die Überwachung eines Raketenmotors, umfassend Mittel, um Ereignisdetektionsinformationen (MSG_{PB}, MSG_{CONS}) in Form von Meldungen zu empfangen, die einem Detektionsdatum (DATE), einer Fehleranzeigekennung und einem Ausgangs-Konfidenzniveau (NC2) zugeordnet sind, Mittel um mindestens einen remanenten Konfidenzniveauwert (NC, SIG_{BRUT}, SIG, SIG_{RV}, SIG1, SIG2) zu erzeugen, wobei das System durch ein Mittel gekennzeichnet ist, das ausgelegt ist, um ein von einem Benutzer über ein Endgerät parametriertes und von dem Endgerät empfangenes Abnahmegesetz zu berücksichtigen, wobei der remanente Konfidenzniveauwert im Laufe der Zeit ab dem Detektionsdatum (DATE) gemäß dem Abnahmegesetz abnimmt, wobei der remanente Konfidenzniveauwert (SIG_{BRUT}, SIG, SIG_{RV}, SIG1, SIG2) einem Fehlerindikator (FLAG, FLAG1, FLAG2) zugeordnet ist, der einer der Ereignisdetektionsinformationen (MSG_{PB}, MSG_{CONS}) zugeordnet ist, wobei das System ein Modul (MODFST) umfasst, das ausgelegt ist, um mindestens den Fehlerindikator, der dem remanenten Konfidenzniveauwert zugeordnet ist, und den Ausgangskonfidenzniveau-Fehlerindikator zusammenzuführen, um eine Pannendiagnose zu erhalten.

2. Verarbeitungssystem nach Anspruch 1, wobei der mindestens eine remanente Konfidenzniveauwert (SIG_{BRUT}, SIG, SIG_{RV}, SIG1, SIG2) mindestens einem Ausfallintensitätswert (Val-1, Val0, Val1, Val2, Val3) zugeordnet ist, der in Abhängigkeit von einem Ausfallintensitätswert (ND2C) ausgewählt ist, der dem Detektionsdatum (DATE) zugeordnet ist.

3. Verarbeitungssystem nach einem der Ansprüche 1 bis 2, umfassend Mittel, um mindestens zwei remanente Konfidenzniveauwerte (SIG1, SIG2) zu erzeugen, die jeweils einem Ausfallintensitätswert (Val-1, Val0, Val1, Val2, Val3) zugeordnet sind, wobei sich jeder der mindestens zwei remanenten Konfidenzniveauwerte (SIG1, SIG2) unabhängig vom anderen entwickelt.

4. Verarbeitungssystem nach einem der Ansprüche 1 bis 2, umfassend Mittel, um mindestens zwei remanente Konfidenzniveauwerte (SIG1, SIG2) zu erzeugen, die jeweils einem Ausfallintensitätswert (Val-1, Val0, Val1, Val2, Val3) zugeordnet sind, wobei der remanente Konfidenzniveauwert von den mindestens zwei remanenten Konfidenzniveauwerten (SIG1, SIG2), der dem höchsten oder dem niedrigsten Ausfallintensitätswert zugeordnet ist, auf null gesetzt wird, wenn der andere remanente Konfidenzniveauwert (SIG1, SIG2) nicht null ist.

5. Verarbeitungssystem nach einem der Ansprüche 1 bis 4, wobei der mindestens eine remanente Konfidenzniveauwert (SIG_{BRUT}, SIG, SIG_{RV}, SIG1, SIG2) im Laufe der Zeit ab dem Detektionsdatum (DATE) ab einem Wert abnimmt, der vom Ausgangskonfidenzniveau (NC2, NC2C) abhängt, das einer der Ereignisdetektionsinformationen (MSG_{PB}, MSG_{CONS}) zugeordnet ist.

6. Verarbeitungssystem nach Anspruch 5, das, wobei der mindestens eine remanente Konfidenzniveauwert (SIG_{BRUT}, SIG) ein Bruttowert ist, zusätzlich Mittel umfasst, um einen integrierten remanenten Konfidenzniveauwert (SIG_{RV}) zu erzeugen, dessen Wert zum Detektionsdatum (DATE) gleich dem Ausgangskonfidenzniveau (NC2, NC2C) ist, kombiniert mit dem remanente Konfidenzniveaubruttowert (SIG_{BRUT}, SIG) zum Detektionsdatum (DATE), und dessen Wert zu den Daten, die keine Detektionsdaten sind, null ist.

7. Verarbeitungssystem nach Anspruch 6, das, wobei der mindestens eine remanente Konfidenzniveauwert (SIG_{BRUT}, SIG) ein Bruttowert ist, zusätzlich Mittel umfasst, um einen integrierten remanenten Konfidenzniveauwert (SIG_{RV}) zu erzeugen, dessen Wert zu jedem Datum gleich dem Ausgangskonfidenzniveau (NC2, NC2C) ist, kombiniert mit dem remanenten Konfidenzniveaubruttowert (SIG_{BRUT}, SIG).

8. Verarbeitungssystem nach einem der Ansprüche 6 oder 7, wobei die Kombination zwischen dem Ausgangskonfidenzniveau und dem remanenten Konfidenzniveaubruttowert zur Ermittlung des integrierten remanenten Konfidenzwerts eine Addition ist.

9. Verarbeitungssystem nach einem der Ansprüche 1 bis 8, wobei die Ereignisdetektionsinformation, die einem Detektionsdatum (DATE) zugeordnet ist, in einer Pannenmeldung (MSG_{CONS}) enthalten ist, die mindestens ein Pannendatum (DATE), ein Ausgangskonfidenzniveau (NC2C) und eine Pannenkennung (ID_{PANNE}) umfasst.

10. Verarbeitungssystem nach einem der Ansprüche 1 bis 9, wobei eine Dauer (FEN_{TEMP}), ab der der mindestens eine remanente Konfidenzniveauwert (SIG_{BRUT}, SIG, SIG_{RV}) null ist, von einem Benutzer (TERMINAL) für einen einzigen Fehlerindikator (FLAG, FLAG1, FLAG2) oder für mehrere Fehlerindikatoren (FLAG, FLAG1, FLAG2) parametriert ist.

11. Verarbeitungssystem nach einem der Ansprüche 1 bis 10, wobei das Abnahmegesetz von dem Benutzer (TERMINAL) für den mindestens einen remanenten Konfidenzniveauwert (SIG_{BRUT}, SIG, SIG_{RV}) für einen einzigen Fehlerindikator (FLAG, FLAG1, FLAG2) oder für mehrere Fehlerindikatoren (FLAG, FLAG1, FLAG2) parametriert ist.

12. Verfahren zur Verarbeitung von Informationen für die Überwachung eines Raketenmotors, umfassend einen Empfangsschritt von Ereignissdetektionsinformationen in Form von Meldungen, die einem Detektionsdatum (DATE), einer Fehleranzeigekennung und einem Ausgangs-Konfidenzniveau (NC2) zugeordnet sind, einen Schritt des Erzeugens mindestens eines remanenten Konfidenzniveauwerts, wobei das Verfahren durch einen Empfangsschritt eines von einem Benutzer über ein Endgerät parametrierten und von dem Endgerät empfangenen Abnahmegesetzes gekennzeichnet ist, wobei der remanente Konfidenzniveauwert im Laufe der Zeit ab dem Detektionsdatum gemäß dem Abnahmegesetz abnimmt, wobei jeder remanente Konfidenzniveauwert (SIG_{BRUT}, SIG, SIG_{RV}, SIG1, SIG2) einem Fehlerindikator (FLAG, FLAG1, FLAG2) zugeordnet ist, der einer der Ereignisdetektionsinformationen (MSG_{PB}, MSG_{CONS}) zugeordnet ist, wobei das Verfahren einen Schritt des Zusammenführens des Fehlerindikators, der dem remanenten Konfidenzniveauwert zugeordnet ist, und des Ausgangskonfidenzniveau-Fehlerindikators umfasst, um eine Pannendiagnose zu erhalten.

## Claims

1. An information processor system (MOD_{TRANS}) for monitoring a rocket engine comprising means for receiving event detection information (MSG_{PB}, MSG_{CONS}) as messages associated with a detection time (DATE), with a fault flag and an initial confidence level (NC2), means for generating at least one remanent confidence level value (NC, SIG_{BRUT}, SIG, SIG_{RV}, SIG₁, SIG₂), said system being **characterized by** means configured for taking into account a decreasing relationship set by a user through a terminal and received from said terminal, the remanent confidence level value decreasing over time from said detection time (DATE) according to said decreasing relationship, the remanent confidence level value (NC, SIG_{BRUT}, SIG, SIG_{RV}, SIG₁, SIG₂) being associated with a fault flag (FLAG, FLAG1, FLAG2), associated with one of the event detection information (MSG_{PB}, MSG_{CONS}), said system comprising a module (MODFST) configured to merge at least said fault flag associated with said remanent confidence level value with said fault flag at said initial confidence level to obtain a failure diagnosis.

2. An information processor system according to claim 1, wherein the remanent confidence level value (SIG BRUT, SIG, SIG RV, SIG1, SIG2) is associated with at least one failure magnitude value (Val-1, Val0, Val1, Val2, Val3) selected as a function of a failure magnitude value (ND2C) associated with said detection time (DATE).

3. An information processor system according to any one of claims 1 or 2, comprising means for generating at least two remanent confidence level values (SIG1, SIG2), each associated with a malfunction magnitude value (Val-1, Val0, Val1, Val2, Val3), each of the at least two remanent confidence level values (SIG1, SIG2) varying independently of the other (Figure 7).

4. An information processor system according to any one of claims 1 or 2, comprising means for generating at least two remanent confidence level values (SIG1, SIG2) each associated with a malfunction magnitude value (Val-1, Val0, Val1, Val2, Val3), the remanent confidence level value among the at least two remanent confidence level values (SIG1, SIG2) 15 associated with the highest malfunction magnitude value or the lowest malfunction magnitude value being reset to zero if the other remanent confidence level value (SIG1, SIG2) is not zero.

5. An information processor system according to any one of claims 1 to 4, wherein, starting from the detection time (DATE), the at least one remanent confidence level value (SIG BRUT, SIG, SIG RV, SIG1, SIG2) decreases over time from a value that depends on an initial confidence level (NC2, NC2C) associated with one of the event detection information (MSG_{PB}, MSG_{CONS}).

6. An information processor system according to claim 5, wherein, for the remanent confidence level value (SIG_{BRUT}, SIG) being a raw value, the system further includes means for generating an integrated remanent confidence level value (SIG_{RV}) of value at said detection time (DATE) that is equal to the initial confidence level (NC2, NC2C) combined with the raw remanent confidence level value (SIG_{BRUT}, SIG) at said detection time (DATE), and of value at times that are not detection times that is zero.

7. An information processor system according to claim 6, wherein, for the remanent confidence level value (SIG_{BRUT}, SIG) being a raw value, the system further comprises means for generating an integrated remanent confidence level value (SIG_{RV}) of value at all times equal to the initial confidence level (NC2, NC2C) combined with the raw remanent confidence level value (SIG_{BRUT}, SIG).

8. An information processor system according to claim 6 or claim 7, wherein the initial confidence level and the raw remanent confidence level value are combined to give the integrated remanent confidence value by means of an -addition.

9. An information processor system according to any one of claims 1 to 8, wherein said piece of detection information associated with a detection time (DATE) is included in a failure message (MSG_{CONS}) comprising at least a failure time (DATE), an initial confidence level (NC2C), and a failure identifier (ID_{FAILURE}).

10. An information processor system according to any one of claims 1 to 9, wherein a duration (FEN_{TEMP}) from which the at least one remanent confidence level value (SIG_{BRUT}, SIG, SIG_{RV}) is zero may be set by a user (TERMINAL), for a single fault flag (FLAG, FLAG1, FLAG2), or for a plurality of fault flags (FLAG, FLAG1, FLAG2).

11. An information processor system according to any one of claims 1 to 10, wherein the decreasing relationship is set by a user (TERMINAL) for the at least one remanent confidence level value (SIG_{BRUT}, SIG, SIG_{RV}), for a single fault flag (FLAG, FLAG1, FLAG2), or for a plurality of fault flags (FLAG, FLAG1, FLAG2).

12. An information processing method for monitoring a rocket engine, the method comprising
- a step of receiving event detection information (MSG_{PB}, MSG_{CONS}) as messages associated with a detection time (DATE), with a fault flag and an initial confidence level (NC2),
- a step of of generating at least one remanent confidence level value,
, the method being **characterized in that** it further comprises a step of receiving a decreasing relationship set by a user through a terminal and received from said terminal, the remanent confidence level value decreasing over time from said detection time (DATE) according to said decreasing relationship, the remanent confidence level value (NC, SIG_{BRUT}, SIG, SIG_{RV}, SIG₁, SIG₂) being associated with a fault flag (FLAG, FLAG1, FLAG2), associated with one of the event detection information (MSG_{PB}, MSG_{CONS}), said method comprising a step of merging at least said fault flag associated with said remanent confidence level value with said fault flag at said initial confidence level to obtain a failure diagnosis.
